# EUROPEAN PATENT SPECIFICATION

(11) **EP 4 380 419 B1**
(45) Date of publication and mention of the grant of the patent: **21.05.2025**
(21) Application number: 22762142.2
(22) Date of filing: 08.08.2022
(51) Int. Cl.: A47K 1/02, A45D 19/04, E03C 1/18

(54) **WATER DISPENSING APPARATUS**
WASSERSPENDER
APPAREIL DE DISTRIBUTION D'EAU

(30) Priority: 06.08.2021 GB 202111404
(43) Date of publication of application: 12.06.2024
(73) Proprietor: Glass, Peter, Eynsford DA4 0JJ (GB)
(72) Inventor: Glass, Peter, Eynsford DA4 0JJ (GB)
(74) Representative: Valet Patent Services Limited
(86) International application number: PCT/IB2022/057372
(87) International publication number: WO 2023/012766

(56) References cited:
- WO-A1-00/53071

## Description

### Field of the invention

The invention relates to an apparatus for dispensing water. In particular, the invention relates to an apparatus for dispensing and disinfecting water stored in a tank.

Document WO0053071 forms background art which can be regarded as useful to understand the invention. It discloses an apparatus for dispensing water, comprising, inter alia, a water inlet, a water outlet and a clean water tank.

### Background of the invention

A ready supply of water, and especially clean water, is one of the most basic and essential human needs. In order to improve constant and secure access to water, it has long been the practice of people around the world to create water storage containers or tanks, and take water from the containers as needed.

One of the dangers associated with this practice is the potential growth of Legionella, a bacterium which causes Legionnaires' disease, which can be fatal. Legionella can develop in water at temperatures between approximately 20 and 55 degrees Celsius. These temperatures may occur naturally in warm environments, and may be caused intentionally in water heating systems, for example systems for use in washing.

It has long been known that clean hands are essential to good health. The COVID-19 pandemic made hygiene all the more essential to health and brought it to the forefront of popular consciousness. At all times, but especially during crises of that sort, many establishments require ready access to multiple hand washing stations to make frequent hand washing practical and convenient. This is especially true of hospitals and other medical facilities.

Many medical facilities find themselves stretched beyond the capacity intended by their architects. Consequently, the number of available hand washing stations does not meet demand, particularly during times of epidemic.

A solution is needed to quickly conveniently and inexpensively provide additional hygiene facilities. A popular prior art solution is the provision of mobile hand washing stations. These are typically self-contained units having a housing, a sink and a tap (faucet). It is often the case that such units are needed in locations with no nearby mains water connection. For this reason, typical prior art mobile hand washing stations are provided with clean water storage tanks within their housings.

It is well known best practice to wash one's hands with hot water where possible. Mobile hand washing stations are therefore preferably provided with a water heating element. Suitable water heating elements are available in two broad categories: those which continuously heat the water stored in the tank, and those which heat only the water that is drawn to the tap, as it is needed.

The first category has several advantages over the second. It is more energy efficient to keep a tank of water hot than it is to rapidly heat water as it makes its way to the tap, and it is easier to achieve the desired temperature. Nevertheless, a body of heated water which remains static for long periods of time may become host to a number of dangerous pathogens, such as Legionella. It is therefore necessary to make some form of anti-pathogenic provision in such systems.

One well known anti-pathogenic provision is ultra-violet (UV) irradiation. UV radiation, especially UV-C radiation, is known to kill many pathogens. There are practical difficulties, however, involved in using this method to purify a large, static volume of water, because it is difficult to ensure complete irradiation of the whole volume. It is more practical to irradiate a small volume of water, such as water flowing through a pipe. Some solutions in the prior art, therefore, irradiate the water on its way from storage to the tap, but because this route is typically relatively short, there is a danger that the water is not exposed to the radiation for long enough for complete purification.

A solution is required to safely and efficiently purify water stored in a mobile hand washing station.

### Summary of the invention

A first aspect of the invention provides an apparatus for dispensing water, comprising: a water dispenser having a water inlet, a water dispensing outlet, and a water circulation outlet, wherein the water dispensing outlet can be opened or closed in order to selectively allow, in use, water to exit the water dispenser through the water dispensing outlet; a water tank; a water circuit comprising a first part from the water tank to the water inlet of the water dispenser, and a second part from the water circulation outlet of the water dispenser to the water tank; a water purification unit forming part of the water circuit; and a water pump configured to pump water continuously in use through at least the first part of the water circuit.

This system is advantageous because the water is continuously purified by being cycled through the water purification unit. The water purification unit only needs to irradiate a small volume of water per unit time in order to purify all of the water, because it operates continuously.

In some embodiments, the water purification unit comprises a source of ultra-violet radiation configured to irradiate, in use, water passing through the water purification unit.

Although UV radiation is a particularly effective means of purifying water, it is not the only suitable means. Other suitable means may be used in the invention, such as copper-silver ionisation.

In some embodiments, the water purification unit forms part of the second part of the water circuit.

In some embodiments, the water circulation outlet can be opened or closed in order to selectively allow, in use, water to flow from the water dispenser to the second part of the water circuit. In some such embodiments, the water dispensing outlet and the water circulation outlet are controlled such that, when one of them is open, the other is closed. This increases the pressure of water leaving the water dispensing outlet.

In some such embodiments, the water dispenser comprises a three-way valve adjustable between a first position which permits the flow of water through the water dispensing outlet and not the water circulation outlet, and a second position which permits the flow of water through the water circulation outlet and not the water dispensing outlet.

In some embodiments, the water dispensing outlet is larger than the water circulation outlet. Furthermore, in some embodiments, the water inlet is larger than the water circulation outlet.

In some such embodiments, the radial cross section of the first part of the water circuit is larger than the radial cross section of the second part of the water circuit.

In some embodiments, a water heating element is provided in the water tank.

A second aspect of the invention provides a mobile hand washing unit comprising a mobile housing and an apparatus for dispensing water according to the first aspect. Because typical mobile hand washing units are provided with water tanks because they cannot always be connected to a mains supply of water, it is particularly important to provide them with an effective water purification system.

A third aspect of the invention provides an integrated panel system comprising an apparatus for dispensing water according to the first aspect. Hand washing and other hygiene activities are particularly important on hospital wards, which are often equipped with specialist built-in equipment by means of an integrated panel system. A water purification system according to the invention would therefore be particularly useful when incorporated into an integrated panel system, not least because hospitals often accommodate person at high risk from Legionnaires' disease.

A fourth aspect of the invention provides a sink arrangement comprising an apparatus for dispensing water according to the first aspect. All water systems are vulnerable to Legionella. The water purification system of the invention is suitable for all water dispensing systems, including domestic and commercial sinks and sluices.

### Brief description of the drawings

The invention will now be described, by way of example only, by means of a preferred embodiment and with reference to the following drawings.
Figure 1 depicts a front and side view of a hand washing station according to an embodiment of the invention.
Figure 2 depicts the internal workings of a hand washing station according to the invention.

### Detailed description

As discussed above, the water dispensing apparatus of the invention can be implemented in many different useful contexts. One particularly useful context is in a mobile hand washing station, as depicted in the Figures.

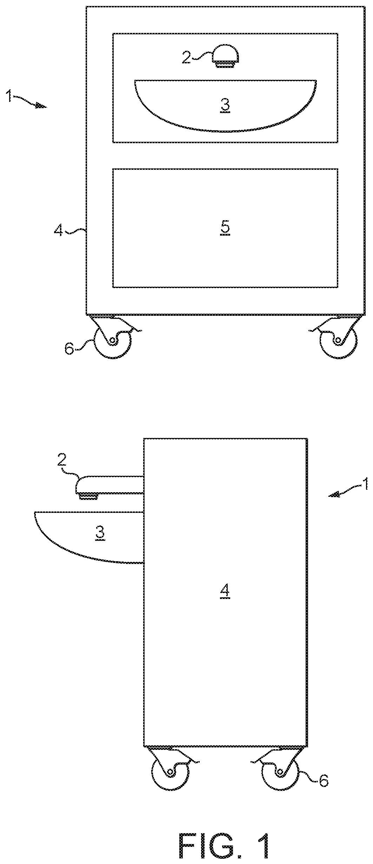

A mobile hand washing station 1 as depicted in Figure 1 comprises a tap or faucet 2, a sink or basin 3, and a housing 4. A removable panel 5 is provided for access to the interior or the housing, for example to allow the manual filling of the tank, or maintenance.

Although they are not shown in Figure 1, it will be clear to the skilled person that other accessories may be provided on the mobile hand washing unit 1. For example, a soap dispenser, such as a motion sensor actuated soap dispenser or a manually actuated soap dispenser, may be provided. A shelf may be provided above the sink 3, on which soap and other items can be placed. Hand drying facilities, such as a dispenser of paper towels or a warm air drier, may also be provided.

The tap 2 may be activated, that is, caused to discharge water towards the sink, by any conventional means. Typical taps have manual actuators which can be turned or pushed by a user to cause water to flow. In the interests of hygiene, it is preferable to reduce the need for a user to touch any part of the mobile hand washing station, and therefore a remotely activated tap is preferable. For example, the tap may be activated by means of a motion sensor, as is common in the art.

The sink or basin 3 is provided with some means of drainage, typically a grated plug hole. A corresponding plug may optionally be provided, although this may preferably be omitted to further reduce opportunities for the user to touch the mobile hand washing station.

The housing 4 may have any suitable design. It may be made of wood, plastics, composite materials, or metal, for example. It may be provided with wheels 6, or it may be designed for installation in a fixed point. Although the sink 3 is depicted as protruding from the front of the housing 4 in Figure 1, this is not necessary. For example, the sink 3 may be provided on the top surface of the housing 4. The housing 4 may be any suitable size. For example, units for use in adult wards on hospitals may be larger than those for use in primary schools.

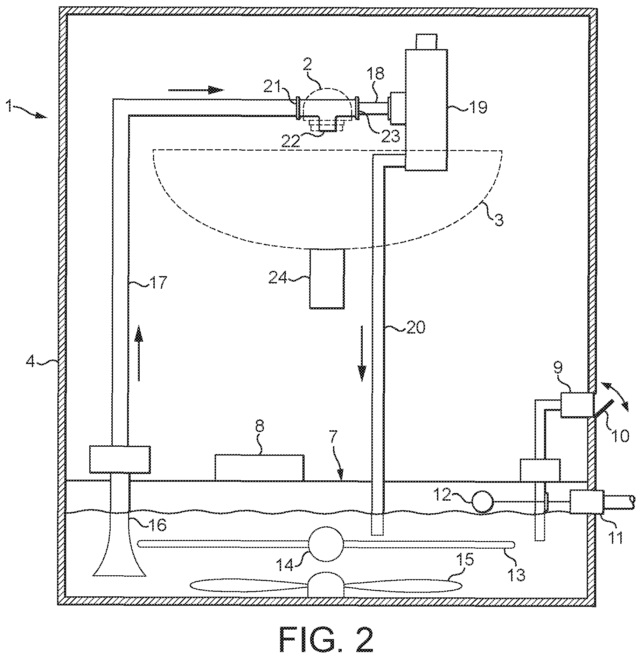

Figure 2 depicts a cutaway view of the mobile hand washing station 1 shown in Figure 1.

A clean water tank 7 is housed within the housing 4. The clean water tank 7 may have any convenient size. A typical clean water tank 7 may have a capacity of 32 litres. The clean water tank 7 may be made of any suitable material, such as plastics. The material should be selected so as not to contaminate the water over time. A lid 8 may be provided on the clean water tank 7 for access, to fill or drain the clean water tank , or to perform maintenance.

A clean water tank manual inlet may be provided from a manual inlet connector 9 through the housing 4 to the clean water tank 7. The manual inlet connector 9 may optionally be provided with a removable cover 10 for when it is not in use.

The manual inlet connector 9 can be used to manually fill the clean water tank 7 by means of a connecting hose or other suitable clean water conveying means.

A clean water tank mains inlet may be provided from a mains inlet connector 11 through the housing 4 to the clean water tank 7. The mains inlet connector 11 may be permanently connected in use to a mains water source, and may controlled by a stop-cock 12 and valve to cut off the mains water supply when the clean water tank 7 is, for example, substantially full.

A heating element 13 is provided in the clean water tank 7. This may be any suitable water heating element known in the art. A temperature sensor 14 is preferably provided, in which case the heating element 13 is controlled to reduce or stop its heating action when the temperature sensor 14 detects that the water temperature has exceeded a preselected threshold.

An agitator may also be provided in the clean water tank 7. The purpose of the agitator 15 is to cause movement and circulation of the water within the clean water tank 7. This serves to increase the likelihood that all of the water in the clean water tank 7 will be periodically pumped through the clean water circuit, as will be described below. The agitator 15 is not essential, since the clean water circuit itself will cause sufficient movement of the water in the clean water tank 7, except in cases where a very large clean tank 7 is used. The agitator 15 may take any suitable form known in the art. For example, it may be a moving baffle, or a rotating impellor.

A semi-submersible pump 16 is also provided in the clean water tank. Any suitable pump may be selected. There are many suitable off-the-shelf pumps. The inventor has found the Xylem Semi-Submersible SPC 42 to be suitable for the purposes of the invention, for example. The pump 16 draws water from the clean water tank 7 and drives it through the clean water circuit of the invention. An exemplary pumping rate for the depicted embodiment is 18 litres per minute.

The clean water circuit comprises in the depicted embodiment comprises: a first section of pipe 17, leading from the pump 16 to the tap 2; a second section of pipe 18, leading from the tap 2 to the water purification unit 19; and a third section of pipe 20, leading from the water purification unit 19 back to the clean water tank 7. The pipes 17, 18, 20 may be made of any suitable material, such as plastics, selected so as not to contaminate the water.

Pipe 17 enters the tap 2 at a first tap inlet 21, as is conventional for taps. From there, it leads to both a first tap outlet 22 and a second tap outlet 23. The first tap outlet 22 is the conventional tap outlet 22. It is ordinarily closed, for example by means of a valve which, when opened by a user as described above, causes water to flow from the tap to the sink 3 below. The second tap outlet 23 leads to the second pipe section 18.

Although it is not shown in Figure 2, in some embodiments a second tap outlet valve may be provided at the second tap outlet 23. This valve may be controllably connected to the valve (the word being used here to incorporate other tap opening/closing means) at the first tap outlet 22, so as to close when the valve at the first tap outlet 22 is opened. These two valves may be replaced by a single three-way valve (not shown).

The water purification unit 19 is a tank, chamber or section of pipe through which water in the clean water circuit passes between pipe sections 18 and 20. It is made of a suitable material, such as plastics, selected so as not to contaminate the water. It is preferably opaque, to prevent exposure of a user to UV radiation if the front panel 5 is removed. It may preferably have an interior surface or surfaces which reflect UV radiation.

At least one UV radiation source (not shown), preferably at least one UV-C radiation source, such as a light emitting diode (LED), is provided in the water purification tank. The UV radiation source(s) should preferably be water proof, and may be disposed in a part of the water purification unit 19 in which it will not be submerged in use.

The flow path of the clean water circuit within the water purification unit 19 may be meandering so as to increase the exposure of the water to the UV radiation.

The clean water circuit exits the water purification unit 19 through pipe section 20, which returns the water to the clean water tank 7, completing the clean water circuit. If the point to which the pipe section 20 returns water to the clean water tank 7 and the point from which the semi-submersible pump 16 removes water from the clean water tank 7 are sufficiently distant, the clean water circuit will create movement in substantially all the water in the clean water tank 7, mitigating the need for an agitator 15 unless the clean water tank 7 is very large.

In some embodiments, pipe 17 is wider than pipe 18 and pipe 20. This means, when the first tap outlet 22 is closed, the water pressure in sections 18 and 20 is higher than in section 17. When the first tap outlet 22 is open, at least some of the water entering the first tap inlet 21 from pipe section 17 will take the 'path of least resistance' and leave the tap by first tap outlet 22. The ratio of the rate of water leaving the tap 2 via first tap outlet 22 to the rate of water leaving the tap 2 via the second tap outlet 23 is likely to increase as the width of pipe sections 18 and 20 reduces compared with the width of pipe section 17. In an exemplary embodiment, pipe section 17 has a diameter of 22 mm, and pipe sections 18 and 20 have diameters of 15 mm.

The drainage of the mobile hand washing station is not a part of the present invention, and so it will not be treated in great detail. Any suitable drainage system known in the art could be used. For example, the sink 3 may be provided with a plug hole which drains to a waste water pipe, shown partially as 24, through which waste water flows to an outlet of the housing 4, which can be plumbed into a nearby external drainage system. Alternatively, the waste water pipe may flow to a waste water tank, separate from the clean water tank 7. An additional pump or pumps may be provided in the drainage system, to move waste water through the system or to pump it out of the housing.

As will be apparent to the skilled person, several components of the embodiment described above require electrical power to function. In particular, the tap activation sensor, the heating element 13 and temperature sensor 14, the agitator 15, the semi-submersible pump 16, and the UV source of the water purification unit 19 require electrical power. Other components requiring electrical power to function may also be provided in some embodiments. For example, a control system incorporating a processor may be employed to control the heating element 13 based on input from the temperature sensor 14, or a controller may be employed to control a valve at the second tap outlet 23 in response to a user opening the first tap outlet 22. Various other possible control elements and other components requiring electrical power will be apparent to the person skilled in the art.

Each component requiring electrical power may be connected to a mains electricity supply by means of one or more electrical plugs. For example, all electrical components may be powered from a single power bus within the housing 4, which is itself connected to a mains electricity supply by means of a single cable extending from the housing.

In other embodiments, one or more components may be powered by a battery stored within the housing. For example, in a preferred embodiment, the tap sensor may be powered by a battery while the other electrical components are powered by a mains supply. In this preferred embodiment, the other electrical components (e.g. the semi-submersible pump 16, the heating element 13, the water purification unit 19 and, where provided, the agitator 15) are powered from a single power bus within the housing 4, connected to a mains electricity supply by means of a single cable extending from the housing. Furthermore, in this embodiment, these other electrical components will be selected so as to have a total load of no more than 3kW. This enables the unit to comply with 'plug and play' requirements.

Other sources of electricity may be connected to one or more of the electrical components of the invention, such as solar power or other renewable power sources. The skilled person will readily appreciate the many possible ways of powering the components of the invention.

Although the invention has been described by way of one or more preferred embodiments, these embodiments are not limiting. The scope of the invention is limited only by the claims.

## Claims

1. An apparatus for dispensing water, comprising:
a water dispenser having a water inlet (21), a water dispensing outlet (22), and a water circulation outlet (23), wherein
the water dispensing outlet can be opened or closed in order to selectively allow, in use, water to exit the water dispenser through the water dispensing outlet;
a water tank (7);
a water circuit comprising a first part (17) from the water tank to the water inlet of the water dispenser, and a second part (20) from the water circulation outlet of the water dispenser to the water tank;
a water purification unit (19) forming part of the water circuit; and
a water pump (16)
configured to pump water continuously in use through at least the first part of the water circuit.

2. An apparatus for dispensing water according to claim 1, wherein the water purification unit comprises a source of ultra-violet radiation configured to irradiate, in use, water passing through the water purification unit.

3. An apparatus for dispensing water according to claim 1 or claim 2, wherein the water purification unit forms part of the second part of the water circuit.

4. An apparatus for dispensing water according to any preceding claim, wherein the water circulation outlet can be opened or closed in order to selectively allow, in use, water to flow from the water dispenser to the second part of the water circuit.

5. An apparatus for dispensing water according to claim 4, wherein the water dispensing outlet and the water circulation outlet are controlled such that, when one of them is open, the other is closed.

6. An apparatus for dispensing water according to claim 5, wherein the water dispenser comprises a three-way valve adjustable between a first position which permits the flow of water through the water dispensing outlet and not the water circulation outlet, and a second position which permits the flow of water through the water circulation outlet and not the water dispensing outlet.

7. An apparatus for dispensing water according to any preceding claim wherein the water dispensing outlet is larger than the water circulation outlet.

8. An apparatus for dispensing water according to any preceding claim, wherein the water inlet is larger than the water circulation outlet.

9. An apparatus for dispensing water according to claim 7 or claim 8, wherein the radial cross section of the first part of the water circuit is larger than the radial cross section of the second part of the water circuit.

10. An apparatus for dispensing water according to any preceding claim, wherein a water heating element (13) is provided in the water tank.

11. A mobile hand washing unit (1) comprising a mobile housing and an apparatus for dispensing water according to any preceding claim.

12. An integrated panel system comprising an apparatus for dispensing water according to any one of claims 1 to 10.

13. A sink arrangement comprising an apparatus for dispensing water according to any one of claims 1 to 10.

## Patentansprüche

1. Eine Vorrichtung zur Abgabe von Wasser, umfassend:
einen Wasserspender mit einem Wassereinlass (21), einem Wasserabgabeauslass (22) und einem Wasserzirkulationsauslass (23), wobei der Wasserabgabeauslass geöffnet oder geschlossen werden kann, um im Gebrauch selektiv zu ermöglichen, dass Wasser den Wasserspender durch den Wasserabgabeauslass verlässt;
einen Wassertank (7);
einen Wasserkreislauf, der einen ersten Teil (17) vom Wassertank zum Wassereinlass der Wasserabgabevorrichtung und einen zweiten Teil (20) vom Wasserzirkulationsauslass der Wasserabgabevorrichtung zum Wassertank umfasst;
eine Wasserreinigungseinheit (19), die Teil des Wasserkreislaufs ist; und
eine Wasserpumpe (16), die so konfiguriert ist, dass sie im Betrieb kontinuierlich Wasser durch mindestens den ersten Teil des Wasserkreislaufs pumpt.

2. Eine Vorrichtung zur Abgabe von Wasser nach Anspruch 1, wobei die Wasserreinigungseinheit eine Quelle für ultraviolette Strahlung umfasst, die so konfiguriert ist, dass sie im Gebrauch Wasser bestrahlt, das durch die Wasserreinigungseinheit fließt

3. Eine Vorrichtung zur Abgabe von Wasser nach Anspruch 1 oder Anspruch 2, wobei die Wasserreinigungseinheit Teil des zweiten Teils des Wasserkreislaufs ist.

4. Eine Vorrichtung zur Abgabe von Wasser nach einem der vorhergehenden Ansprüche, wobei der Wasserzirkulationsauslass geöffnet oder geschlossen werden kann, um im Gebrauch selektiv zu ermöglichen, dass Wasser vom Wasserspender zum zweiten Teil des Wasserkreislaufs fließt.

5. Eine Vorrichtung zur Abgabe von Wasser nach Anspruch 4, wobei der Wasserabgabeauslass und der Wasserzirkulationsauslass so gesteuert werden, dass, wenn einer von ihnen offen ist, der andere geschlossen ist.

6. Eine Vorrichtung zur Abgabe von Wasser nach Anspruch 5, wobei der Wasserspender ein Dreiwegeventil umfasst, das zwischen einer ersten Stellung, die den Wasserfluss durch den Wasserabgabeauslass und nicht durch den Wasserzirkulationsauslass ermöglicht, und einer zweiten Stellung, die den Wasserfluss durch den Wasserzirkulationsauslass und nicht durch den Wasserabgabeauslass ermöglicht, einstellbar ist.

7. Eine Vorrichtung zur Abgabe von Wasser nach einem der vorhergehenden Ansprüche, wobei der Wasserabgabeauslass größer ist als der Wasserzirkulationsauslass.

8. Eine Vorrichtung zur Abgabe von Wasser nach einem der vorhergehenden Ansprüche, wobei der Wassereinlass größer ist als der Wasserzirkulationsauslass.

9. Eine Vorrichtung zur Abgabe von Wasser nach Anspruch 7 oder 8, wobei der radiale Querschnitt des ersten Teils des Wasserkreislaufs größer ist als der radiale Querschnitt des zweiten Teils des Wasserkreislaufs.

10. Eine Vorrichtung zur Abgabe von Wasser nach einem der vorhergehenden Ansprüche, wobei ein Wasserheizelement (13) im Wassertank vorgesehen ist.

11. Eine mobile Handwaschanlage (1) mit einem mobilen Gehäuse und einer Vorrichtung zur Abgabe von Wasser nach einem der vorhergehenden Ansprüche.

12. Ein integriertes Paneelsystem mit einer Vorrichtung zur Abgabe von Wasser nach einem der Ansprüche 1 bis 10.

13. Eine Waschbeckenanordung mit einer Vorrichtung zur Abgabe von Wasser nach einem der Ansprüche 1 bis 10.

## Revendications

1. Appareil de distribution d'eau, comprenant :
un distributeur d'eau comportant une entrée d'eau (21), une sortie de distribution d'eau (22) et une sortie de circulation d'eau (23), ladite sortie de distribution d'eau pouvant être ouverte ou fermée afin de permettre sélectivement, en cours d'utilisation, à l'eau de sortir du distributeur d'eau par la sortie de distribution d'eau
un réservoir d'eau (7) ;
un circuit d'eau comprenant une première partie (17) allant du réservoir d'eau à l'entrée d'eau du distributeur d'eau, et une seconde partie (20) allant de la sortie de circulation d'eau du distributeur d'eau au réservoir d'eau ;
une unité de purification d'eau (19) faisant partie du circuit d'eau ; et
une pompe à eau (16) configurée pour pomper l'eau en continu pendant l'utilisation à travers au moins la première partie du circuit d'eau.

2. Appareil de distribution d'eau selon la revendication 1, dans lequel l'unité de purification d'eau comprend une source de rayonnement ultraviolet configurée pour irradier, en cours d'utilisation, l'eau passant à travers l'unité de purification d'eau.

3. Appareil de distribution d'eau selon la revendication 1 ou 2, dans lequel l'unité de purification d'eau fait partie de la seconde partie du circuit d'eau.

4. Appareil de distribution d'eau selon l'une quelconque des revendications précédentes, dans lequel la sortie de circulation d'eau peut être ouverte ou fermée afin de permettre sélectivement, en cours d'utilisation, à l'eau de s'écouler du distributeur d'eau vers la seconde partie du circuit d'eau.

5. Appareil de distribution d'eau selon la revendication 4, dans lequel la sortie de distribution d'eau et la sortie de circulation d'eau sont commandées de telle sorte que, lorsque l'une d'elles est ouverte, l'autre est fermée.

6. Appareil de distribution d'eau selon la revendication 5, dans lequel le distributeur d'eau comprend une vanne à trois voies réglable entre une première position qui permet l'écoulement de l'eau à travers la sortie de distribution d'eau et non à travers la sortie de circulation d'eau, et une seconde position qui permet l'écoulement de l'eau à travers la sortie de circulation d'eau et non à travers la sortie de distribution d'eau.

7. Appareil de distribution d'eau selon l'une quelconque des revendications précédentes, dans lequel la sortie de distribution d'eau est de dimension supérieure à celle de la sortie de circulation d'eau.

8. Appareil de distribution d'eau selon l'une quelconque des revendications précédentes, dans lequel l'entrée d'eau est de dimension supérieure à celle de la sortie de circulation d'eau.

9. Appareil de distribution d'eau selon la revendication 7 ou 8, dans lequel la section transversale radiale de la première partie du circuit d'eau est supérieure à la section transversale radiale de la seconde partie du circuit d'eau.

10. Appareil de distribution d'eau selon l'une quelconque des revendications précédentes, dans lequel un élément chauffant d'eau (13) est disposé dans le réservoir d'eau.

11. Unité mobile de lavage des mains (1) comprenant un boîtier mobile et un appareil de distribution d'eau selon l'une quelconque des revendications précédentes.

12. Système de panneau intégré comprenant un appareil de distribution d'eau selon l'une quelconque des revendications 1 à 10.

13. Installation d'évier comprenant un appareil de distribution d'eau selon l'une quelconque des revendications 1 à 10.
